# EUROPEAN PATENT APPLICATION

(11) **EP 4 550 535 A1**
(43) Date of publication of application: **07.05.2025**
(21) Application number: 23830980.1
(22) Date of filing: 05.06.2023
(51) Int. Cl.: H01M 50/107, H01M 10/04, H01M 10/0585, H01M 10/0587, H01M 50/133

(54) **SEALED BATTERY**

(30) Priority: 30.06.2022 JP 2022106579
(71) Applicant: Panasonic Energy Co., Ltd., Osaka 570-8511 (JP)
(72) Inventor: MIHARA Satoru, Osaka 571-0057 (JP)
(74) Representative: Eisenführ Speiser
(86) International application number: PCT/JP2023/020758
(87) International publication number: WO 2024/004530

(57) **Abstract**

A sealed battery according to one example of an embodiment comprises: an electrode body in which a positive electrode (11) and a negative electrode (12) are laminated with a separator (13) therebetween; a bottomed cylindrical external can (20) which has a bottom surface part (20A) and a side surface part (20B) and which accommodates the electrode body; and a sealing body which closes an opening of the external can (20). The external can (20) has a thin portion (30) that is formed along the circumferential direction such that an inner surface of the side surface part (20B) is recessed. The lower end of the thin portion (30) is positioned between the bottom surface part (20A) and the lower end of the positive electrode (11) in the height direction of the external can (20).

## Description

### TECHNICAL FIELD

The present disclosure generally relates to a sealed battery, and more particularly to a sealed battery comprising a bottomed cylindrical exterior housing can.

### BACKGROUND ART

There has been conventionally widely known a sealed battery comprising a bottomed cylindrical exterior housing can that houses an electrode assembly. PATENT LITERATURE 1 discloses a sealed battery that is configured such that by using a bottomed cylindrical exterior housing can in which a notched portion is formed on a can bottom side, the exterior housing can is ruptured at the notched portion when subjected to a load in a height direction. This battery is designed in consideration of prevention of a short circuit between electrodes that may occur when the exterior housing can is compressed in the height direction and an electrode assembly is discharged from the exterior housing can. PATENT LITERATURE 1 discloses that the electrode assembly is discharged from the can bottom side opposite to a sealing assembly to thereby prevent a short circuit between the electrodes.

### CITATION LIST

### PATENT LITERATURE

PATENT LITERATURE 1: Japanese Unexamined Patent Application Publication No. 2009-295576

### SUMMARY

As described above, when the exterior housing can is subjected to a load in the height direction, irregular deformation of a side surface portion may occur which damages the electrode assembly. In the sealed battery of PATENT LITERATURE 1, the notched portion is provided in the exterior housing can to restrict a discharge direction of the electrode assembly, but there is still room for improvement for reducing damage of the electrode assembly caused by the deformation of the exterior housing can.

In order to solve the above-described problem, a sealed battery according to the present disclosure comprises an electrode assembly in which a positive electrode and a negative electrode are laminated with a separator interposed between the positive electrode and the negative electrode, a bottomed cylindrical exterior housing can that has a bottom surface portion and a side surface portion, and houses the electrode assembly, and a sealing assembly with which an opening of the exterior housing can is capped, wherein the exterior housing can has a thin thickness portion formed along a circumferential direction so that an inner surface of the side surface portion is recessed, and a lower end of the thin thickness portion is located between the bottom surface portion of the exterior housing can and a lower end of the positive electrode in a height direction of the exterior housing can.

According to the sealed battery according to the present disclosure, irregular deformation of the side surface portion of the exterior housing can can be reduced which damages the electrode assembly when the exterior housing can is subjected to a load in the height direction.

### BRIEF DESCRIPTION OF DRAWING

FIG. 1 is a sectional view of a sealed battery of an example of embodiments.
FIG. 2 is an enlarged sectional view of a thin thickness portion and its vicinity of an example of embodiments.
FIG. 3 is an enlarged sectional view of the thin thickness portion of an example of embodiments.
FIG. 4 is an enlarged sectional view of a thin thickness portion and its vicinity of an example of embodiments.

### DESCRIPTION OF EMBODIMENTS

As described above, in a conventional exterior housing can having a side surface portion with a uniform thickness, when a load is applied in the height direction, the exterior housing can is buckled to easily cause irregular deformation of the side surface portion, and this deformation may cause damage to the electrode assembly. As a result of making intensive studies to reduce damage of the electrode assembly caused by deformation of the exterior housing can, the present inventors found that the damage of the electrode assembly caused by the deformation of the exterior housing can can be reduced by forming a thin thickness portion along a circumferential direction so that an inner surface of the side surface portion is recessed at a portion that does not face both of the positive electrode and the negative electrode, in the side surface portion of the exterior housing can.

In this case, when the sealed battery is subjected to a load in the height direction, the thin thickness portion is preferentially deformed, which makes it possible to reduce the irregular deformation of the side surface portion. That is, the side surface portion of the exterior housing can can be preferentially deformed in the portion that does not face both of the positive electrode and the negative electrode. In addition, when the thin thickness portion is formed so that the inner surface of the side surface portion is recessed, the exterior housing can is adapted to be deformed to bulge toward the outside of the sealed battery from the thin thickness portion as a starting point, which makes it possible to more reliably reduce the damage of the electrode assembly caused by the deformation of the exterior housing can.

Hereinafter, an example of embodiments of the present disclosure will be described in detail. In the following, as an example of embodiments of the sealed battery according to the present disclosure, a cylindrical battery is exemplified in which a wound electrode assembly 14 is housed in a bottomed cylindrical exterior housing can 20, but the battery may be a rectangular battery comprising a rectangular exterior housing can having a bottomed angular cylindrical shape. Furthermore, the electrode assembly may be a laminate-type electrode assembly in which a plurality of positive electrodes and a plurality of negative electrodes are alternately laminated, one by one, with separators each interposed therebetween. In this specification, for convenience of explanation, the direction along an axial direction of the exterior housing can 20 is defined as an "up-and-down direction", the sealing assembly 19 side of the exterior housing can 20 is defined as "up", and the bottom surface portion 20A side of the exterior housing can 20 is defined as "lower".

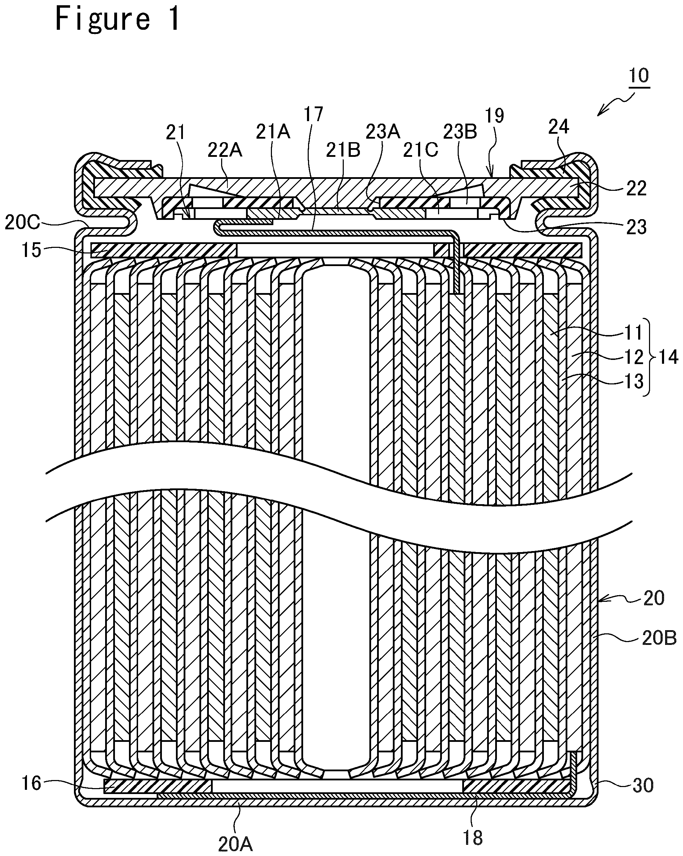

FIG. 1 is a sectional view of the sealed battery 10 of an example of embodiments taken in the up-and-down direction. As illustrated in FIG. 1, the sealed battery 10 comprises an electrode assembly 14, an electrolyte, the bottomed cylindrical exterior housing can 20 that houses the electrode assembly 14 and the electrolyte, and a sealing assembly 19 with which an opening of the exterior housing can 20 is capped. The electrode assembly 14 includes a positive electrode 11, a negative electrode 12, and a separator 13 interposed between the positive electrode 11 and the negative electrode 12, and has a wound structure in which the positive electrode 11 and the negative electrode 12 are wound with the separator 13 interposed therebetween. The exterior housing can 20 is a bottomed cylindrical container, and has the bottom surface portion 20A and a side surface portion 20B.

Although the detail will be described later, the exterior housing can 20 has a thin thickness portion 30 at which a thickness of the side surface portion 20B is locally reduced. The thin thickness portion 30 is an easily deformable portion that is formed along a circumferential direction so that an inner surface of the side surface portion 20B is recessed and is preferentially deformed when a load is applied to the sealed battery 10 in the up-and-down direction.

The electrolyte may be an aqueous electrolyte, or may be a non-aqueous electrolyte. A preferable example of the sealed battery 10 is a non-aqueous electrolyte secondary battery, such as a lithium ion battery, using a non-aqueous electrolyte. The non-aqueous electrolyte includes, for example, a non-aqueous solvent, and an electrolyte salt dissolved in the non-aqueous solvent. Examples of the non-aqueous solvent may include esters, ethers, nitriles, amides, and mixed solvents containing two or more of these. The non-aqueous solvent may contain a halogen-substituted product obtained by substituting at least some of hydrogen atoms in these solvents with a halogen atom such as fluorine. Note that the non-aqueous electrolyte is not limited to a liquid electrolyte and may be a solid electrolyte that uses a gel polymer or the like. As the electrolyte salt, a lithium salt such as LiPF₆ is used.

The electrode assembly 14 has the long positive electrode 11, the long negative electrode 12, and the two long separators 13. The electrode assembly 14 has a positive electrode lead 17 joined to the positive electrode 11 and a negative electrode lead 18 joined to the negative electrode 12 as an electrode lead. The negative electrode 12 is formed to be one size larger than the positive electrode 11 in order to suppress precipitation of lithium. Therefore, a lower end of the negative electrode 12 is disposed at a position closer to the bottom surface portion 20A of the exterior housing can 20 than a lower end of the positive electrode 11. The two separators 13 are each formed to be at least one size larger than the positive electrode 11, and are disposed so as to interpose, for example, the positive electrode 11 therebetween.

The positive electrode 11 has a positive electrode core and a positive electrode mixture layer formed on each surface of the positive electrode core. Examples of the positive electrode core include a foil of a metal that is stable in a potential range of the positive electrode 11, such as aluminum or an aluminum alloy, and a film in which such a metal is provided on the surface layer. The positive electrode mixture layer includes a positive electrode active material, a conductive agent such as acetylene black, and a binder such as polyvinylidene fluoride (PVdF). The positive electrode 11 can be produced by applying a positive electrode mixture slurry including a positive electrode active material, a conductive agent, and a binder on a positive electrode core, drying the resulting coating film, and then compressing the coating film to form a positive electrode mixture layer on each surface of the positive electrode core.

Examples of the positive electrode active material include a lithium-transition metal composite oxide. Examples of a metal element contained in the lithium-transition metal composite oxide include Ni, Co, Mn, Al, B, Mg, Ti, V, Cr, Fe, Cu, Zn, Ga, Sr, Zr, Nb, In, Sn, Ta, and W. A preferable example of the lithium-transition metal composite oxide is a lithium metal composite oxide containing at least one of the group consisting of Ni, Co, and Mn. Specific examples of the lithium metal composite oxide include a composite oxide containing Ni, Co, and Mn, and a composite oxide containing Ni, Co, and Al.

The negative electrode 12 has a negative electrode core and a negative electrode mixture layer formed on each surface of the negative electrode core. Examples of the negative electrode core may include a foil of a metal such as copper or a copper alloy, which is stable within a potential range of the negative electrode 12, and a film in which such a metal is disposed on a surface layer thereof. The negative electrode mixture layer includes a negative electrode active material and a binder such as styrene-butadiene rubber (SBR). The negative electrode 12 can be produced by applying a negative electrode mixture slurry including a negative electrode active material, and a binder on a negative electrode core, drying the resulting coating film, and then compressing the coating film to form a negative electrode mixture layer on each surface of the negative electrode core.

Examples of the negative electrode active material include graphite such as natural graphite such as flaky graphite, massive graphite, and earthy graphite, and artificial graphite such as massive artificial graphite and graphitized mesophase carbon microbeads. For the negative electrode active material, there may be used a metal which is alloyed with lithium, such as Si and Sn, an alloy containing the metal, a compound containing the metal, or the like, and these may be used together with the graphite. A preferable example of the active material is an Si-containing material in which Si fine particles are dispersed in an SiO₂ phase, a silicate phase such as lithium silicate, or an amorphous carbon phase.

Insulating plates 15 and 16 are disposed on upper and lower portions of the electrode assembly 14, respectively. In the example illustrated in FIG. 1, the positive electrode lead 17 attached to the positive electrode 11 extends to the sealing assembly 19 side through a through hole of the insulating plate 15, and the negative electrode lead 18 attached to the negative electrode 12 extends to the bottom surface portion 20A side of the exterior housing can 20 along the outside of the insulating plate 16. The positive electrode lead 17 is connected, by welding or the like, to an inner surface of the sealing assembly 19 that faces the inside of the exterior housing can 20, and the sealing assembly 19 serves as a positive electrode external terminal. The negative electrode lead 18 is connected, by welding or the like, to an inner surface of the bottom surface portion 20A of the exterior housing can 20, and the exterior housing can 20 serves as a negative electrode external terminal.

The exterior housing can 20 is a bottomed cylindrical metal container in which one side in the up-and-down direction is opened. A gasket 24 is provided between the exterior housing can 20 and the sealing assembly 19 to achieve the sealability inside the battery and the insulation property between the exterior housing can 20 and the sealing assembly 19. The exterior housing can 20 has a grooved portion 20C formed by causing a part of the side surface portion 20B to project inward and configured to support the sealing assembly 19. The grooved portion 20C is preferably formed annularly along the circumferential direction of the exterior housing can 20, and supports the sealing assembly 19 on its upper surface. The sealing assembly 19 is fixed to an upper portion of the exterior housing can 20 by the grooved portion 20C and an opening end of the exterior housing can 20 which is crimped to the sealing assembly 19.

The exterior housing can 20 has the thin thickness portion 30 formed along the circumferential direction so that the inner surface of the side surface portion 20B is recessed, as described above. Although the detail will be described later, the thin thickness portion 30 is formed at a portion that does not face both of the positive electrode 11 and the negative electrode 12 in the radial direction of the exterior housing can 20, in a lower end of the side surface portion 20B. The thin thickness portion 30 may be formed in a part of the side surface portion 20B in the circumferential direction of the side surface portion 20B, but total circumferential length of the thin thickness portion 30 is preferably greater than or equal to one third of the circumferential length (circumference) of the inner surface of the side surface portion 20B, and more preferably greater than or equal to one half thereof. In this case, when a load is applied to the exterior housing can 20 in the up-and-down direction, the thin thickness portion 30 is preferentially deformed, which makes it easy to reduce the irregular deformation of the side surface portion 20B. Note that the circumferential length of the thin thickness portion 30 can be measured on the basis of the upper end of the thin thickness portion 30 in the inner surface of the side surface portion 20B.

When the length of the thin thickness portion 30 along the circumferential direction of the inner surface of the side surface portion 20B is shorter than the circumferential length of the side surface portion 20B, a plurality of thin thickness portions 30 are preferably formed at respective positions so as to be present uniformly over the whole in the circumferential direction without being unevenly distributed in a part of the circumferential direction of the inner surface of the side surface portion 20B. The thin thickness portions 30 may be formed substantially at equal intervals along the circumferential direction of the inner surface of the side surface portion 20B, for example. In the present embodiment, the thin thickness portion 30 is formed around the entire circumference of the inner surface of the side surface portion 20B. That is, the thin thickness portion 30 is formed into an annular shape along the circumferential direction of the inner surface of the side surface portion 20B. In this case, the effect of reducing the above-described irregular deformation becomes noticeable.

The sealing assembly 19 is a disk-shaped member comprising a current interruption device. The sealing assembly 19 has a laminated structure of an internal terminal plate 21, an insulating plate 23, and a rupture disk 22 in this order from the electrode assembly 14 side. The internal terminal plate 21 is a metal plate including a thick annular portion 21A to which the positive electrode lead 17 is to be connected, and a thin center 21B that is disconnected from the annular portion 21A when an internal pressure of the battery exceeds a predetermined threshold. A vent hole 21C is formed in the annular portion 21A.

The rupture disk 22 is disposed to face the internal terminal plate 21 with the insulating plate 23 interposed therebetween. In the insulating plate 23, an opening 23A is formed at a radial center, and a vent hole 23B is formed in a portion overlapping with the vent hole 21C in the internal terminal plate 21. The rupture disk 22 has a vent portion 22A that ruptures when the internal pressure of the battery exceeds a predetermined threshold, and the vent portion 22A is connected, by welding or the like, to the center 21B of the internal terminal plate 21 with the opening 23A of the insulating plate 23 interposed therebetween. The insulating plate 23 insulates a portion other than a connection portion between the annular portion 21A and the center 21B of the vent portion.

The vent portion 22A includes a downward projection projecting inward of the battery, and a thin thickness portion formed around the downward projection, and is formed at the radial center of the rupture disk 22. In the sealed battery 10, the internal terminal plate 21 to which the positive electrode lead 17 is connected is electrically connected to the rupture disk 22, whereby a current pathway is formed which connects from the electrode assembly 14 to the rupture disk 22. If an abnormality occurs in the battery, which causes an increase in the internal pressure of the battery, the internal terminal plate 21 ruptures, and the center 21B is disconnected from the annular portion 21A, whereby the vent portion 22A is deformed to project outward of the battery. Thus, the current pathway is cut off. If the internal pressure of the battery further increases, the vent portion 22A ruptures, resulting in formation of a gas venting port.

Note that the structure of the sealing assembly 19 is not limited to the structure illustrated in FIG. 1. The sealing assembly 19 may have a laminate structure including two vent members, and may have a projected sealing assembly cap covering the vent members.

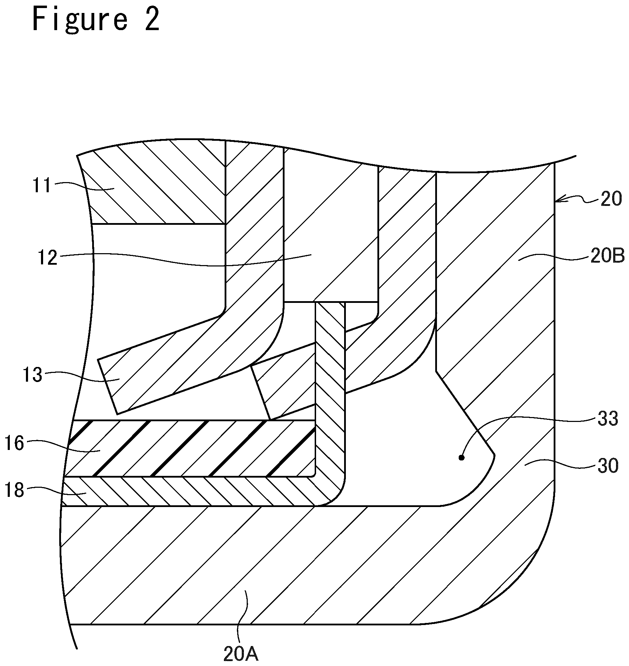

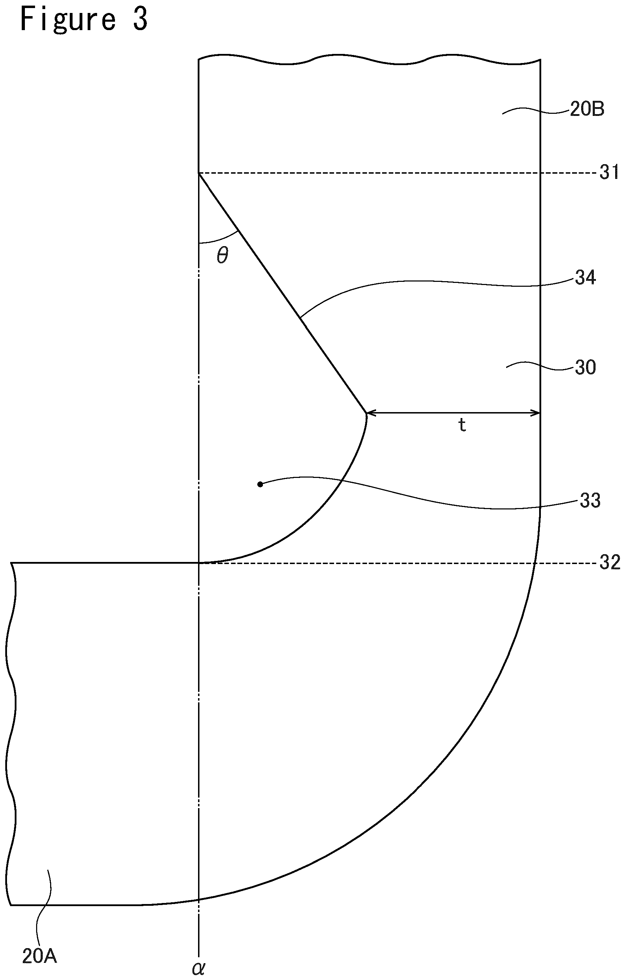

Hereinafter, the thin thickness portion 30 will be described in detail with reference to FIGS. 2 and 3. FIG. 2 is a sectional view of the sealed battery 10 of an example of embodiments taken in the up-and-down direction, and an enlarged view of the thin thickness portion 30 and its vicinity. FIG. 3 is a further enlarged view illustrating the thin thickness portion 30 illustrated in FIG. 2.

As illustrated in FIGS. 2 and 3, the thin thickness portion 30 is a portion at which the thickness of the side surface portion 20B is smaller than that of a portion other than the thin thickness portion 30 (hereinafter, referred to as a "reference region") by forming a groove 33 in an inner surface of the side surface portion 20B, and is an easily deformable portion that is preferentially deformed when a load is applied to the sealed battery 10 in the up-and-down direction. Forming the groove 33 in the inner surface of the side surface portion 20B enables the side surface portion 20B to be deformed to bulge toward the outside of the sealed battery 10 from the thin thickness portion 30 as a starting point by forming the groove 33 as a starting point, whereby the damage of the electrode assembly 14 caused by the deformation of the exterior housing can 20 can be reduced. Note that the reference region of the side surface portion 20B has a substantially uniform thickness.

A lower end 32 of the thin thickness portion 30 is located between the bottom surface portion 20A and the lower end of the positive electrode 11 in the up-and-down direction of the exterior housing can 20. The lower end 32 of the thin thickness portion 30 may be located above from the inner surface of the bottom surface portion 20A by a predetermined length (for example, above by 0.10 mm to 0.50 mm), but in the present embodiment, the lower end 32 is formed at the same height as the inner surface of the bottom surface portion 20A. When viewed in a cross section in the up-and-down direction of the exterior housing can 20, an intersection point between a virtual line α extending in the up-direction along the inner surface of the side surface portion 20B and the inner surface of the reference region of the side surface portion 20B serves as the lower end 32 of the thin thickness portion 30. In a lower portion of the side surface portion 20B, the outer surface of the side surface portion 20B is formed to be flat, and in the inner surface of the side surface portion 20B, a portion recessed from the virtual line α becomes the thin thickness portion 30.

An upper end 31 of the thin thickness portion 30 may be formed to be located above the lower end of the positive electrode 11 in the up-and-down direction of the exterior housing can 20, but is preferably located between the bottom surface portion 20A and the lower end of the positive electrode 11. That is, the entire thin thickness portion 30 is preferably formed at a position that does not face both of the positive electrode 11 and the negative electrode 12 in the radial direction of the exterior housing can 20. In the present embodiment, the lower end of the negative electrode 12 is disposed closer to the bottom surface portion 20A than the lower end of the positive electrode 11, and the entire thin thickness portion 30 is located between the inner surface of the bottom surface portion 20A and the lower end of the negative electrode 12. That is, the entire thin thickness portion 30 is located at a position that does not face both of the positive electrode 11 and the negative electrode 12 and radial direction of the exterior housing can 20.

The upper end 31 of the thin thickness portion 30 may be formed at a position of a height less than or equal to 5.0 mm from the inner surface of the bottom surface portion 20A, for example. The length in the up-and-down direction from the upper end 31 to the lower end 32 of the thin thickness portion 30 is not limited to a particular length, but a preferable example of the length is greater than or equal to 0.10 mm and less than or equal to 1.0 mm. When the upper end 31 of the thin thickness portion 30 is located between the bottom surface portion 20A and the lower end of the positive electrode 11, a portion to be deformed is limited to a portion that does not affect a portion facing the positive electrode 11 and the negative electrode 12 in the electrode assembly 14 even when a large load is applied in the up-and-down direction of the sealed battery 10 and the thin thickness portion 30 is greatly deformed, whereby the damage of the electrode assembly 14 can be effectively reduced.

The thickness along the radial direction of the thin thickness portion 30 can be adjusted by changing the depth of the groove 33. From the viewpoint that the thin thickness portion 30 serves as the easily deformable portion, as illustrated in FIG. 3, a thickness t of a portion at which the thickness of the thin thickness portion 30 is smallest is preferably less than or equal to 80% of the thickness of the reference region, and more preferably greater than or equal to 40% and less than or equal to 80%. Note that the thickness of the thin thickness portion 30 means a length of the thin thickness portion 30 (the side surface portion 20B) along the radial direction of the exterior housing can 20. An example of the minimum thickness of the thin thickness portion 30 is greater than or equal to 0.10 mm and less than or equal to 0.50 mm.

In the inner surface of the thin thickness portion 30, an inclined surface 34 is formed which is inclined at a predetermined angle θ with respect to the up-and-down direction of the exterior housing can 20 so that the thickness of the thin thickness portion 30 is gradually reduced toward the lower end 32 side from the upper end 31. As illustrated in FIG. 3, when viewed in a cross section in the up-and-down direction of the exterior housing can 20, the inclined surface 34 forming the thin thickness portion 30 is inclined at a predetermined angle θ with respect to the virtual line α extending in the up-and-down direction along the inner surface of the side surface portion 20B. When viewed in a cross section in the up-and-down direction of the exterior housing can 20, the inclined surface 34 is formed to be a straight line. Forming the inclined surface 34 enables the thin thickness portion 30 to be preferentially deformed when a load is applied in the up-and-down direction. Furthermore, from a viewpoint that the thin thickness portion 30 is preferentially deformed, the inclined angle θ of the inclined surface 34 is preferably greater than or equal to 30° and less than or equal to 60°. The length in the up-and-down direction of the inclined surface 34 is not limited to a particular length, but a preferable example of the length is greater than or equal to 20% and less than or equal to 80% of the length in the up-and-down direction from the upper end 31 to the lower end 32 of the thin thickness portion 30.

In the inner surface of the thin thickness portion 30, a curved surface is formed so that the thickness of the thin thickness portion 30 is gradually reduced toward the upper end 31 side from the lower end 32. In the same manner as in the upper end 31 side, in the lower end 32 side of the inner surface of the thin thickness portion 30, an inclined surface may be formed so that the thickness of the thin thickness portion 30 is gradually reduced toward the upper end 31 side from the lower end 32.

As illustrated in FIG. 3, when viewed in a cross section in the up-and-down direction of the exterior housing can 20, the shape of the groove 33 is not limited to groove shape having the inclined surface 34 that is inclined at a predetermined angle θ with respect to the virtual line α extending in the up-and-down direction along the inner surface of the side surface portion 20B, and it is only required that the shape of the groove 33 is set to serve as an easily deformable portion.

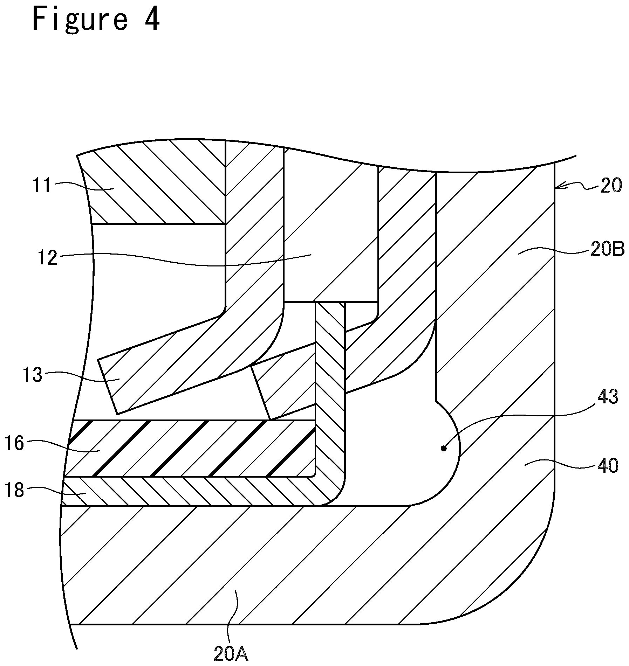

For example, as illustrated in FIG. 4, a groove 43 can be formed in a circular shape without corners. A plurality of grooves 33 may be formed. Furthermore, the thickness along the radial direction of the thin thickness portion 30 at the upper end 31 or the lower end 32 of the thin thickness portion 30 may be smallest among the thicknesses along the radial direction of the thin thickness portion 30.

### EXAMPLES

Hereinafter, although the present disclosure will be further described in detail with reference to Examples, the present disclosure is not limited to the following Examples.

### <Example 1>

### [Production of Exterior Housing Can]

After a drawing process of producing a bottomed cylindrical exterior housing can made of a steel plate material, a groove was formed on the inner surface side of the side surface portion using rotation rollers, and an annular thin thickness portion was formed around the entire circumference of the side surface portion. The lower end of the thin thickness portion was set to be the same height as the inner surface of the bottom surface portion of the exterior housing can. The upper end of the thin thickness portion was set on a lower side of the lower end of the negative electrode so that the entire thin thickness portion was located between the inner surface of the bottom surface portion and the lower end of the negative electrode. Note that since the lower end of the negative electrode is located on the lower side of the lower end of the positive electrode, the upper end of the thin thickness portion is located on the lower side of the lower end of the positive electrode. The thickness of the reference region of the side surface portion was set to 0.30 mm, and the minimum thickness of the thin thickness portion was set to 0.24 mm.

In the inner surface of the thin thickness portion, an inclined surface was formed which was inclined at a predetermined angle θ with respect to the up-and-down direction of the exterior housing can so that the thickness of the thin thickness portion was gradually reduced toward the lower end side from the upper end of the thin thickness portion. The inclined angle θ was set to 30°, and the length in the up-and-down direction of the inclined surface was set to 0.10 mm. The length in the up-and-down direction from the upper end to the lower end of the thin thickness portion was set to 0.20 mm.

### [Production of Positive Electrode]

As the positive electrode active material, LiNi _{0.8}Co_{0.15}Al_{0.05}O₂ was used. Mixing of 100 parts by mass of positive electrode active material, 1.7 parts by mass of polyvinylidene fluoride, and 2.5 parts by mass of acetylene black was performed, and N-methyl-2-pyrrolidone was used as a dispersion medium to prepare a positive electrode mixture paste. The positive electrode was obtained by applying the positive electrode mixture paste on each surface of the positive electrode core made of an aluminum foil except for a connection portion of the positive electrode lead, drying the resulting coating film, and then compressing the coating film at a predetermined thickness. This positive electrode was cut into a predetermined dimension, and the positive electrode lead was connected to an exposed portion of the core by ultrasound welding.

### [Production of Negative Electrode]

As the negative electrode active material, graphitizable carbon particles were used. Mixing of 100 parts by mass of negative electrode active material, 0.6 parts by mass of polyvinylidene fluoride, and 1 part by mass of carboxymethyl cellulose was performed, and water was used as a dispersion medium to obtain a negative electrode paste. The negative electrode was obtained by applying the negative electrode mixture paste on each surface of the negative electrode core made of a copper foil, drying the resulting coating film, and then compressing the coating film at a predetermined thickness. This negative electrode was cut into a predetermined dimension, and the negative electrode lead was connected to an exposed portion of the core by ultrasound welding.

### [Preparation of Non-Aqueous Electrolytic Solution]

Lithium hexafluorophosphate (LiPF₆) was dissolved in a mixed solvent of ethylene carbonate (EC), diethyl carbonate (DEC) and ethyl methyl carbonate (EMC) to obtain a concentration of 1.0 mol/L, to prepare a non-aqueous electrolytic solution.

### [Assembly of Battery]

The above-described positive electrode and negative electrode were spirally wound with a separator made of polyolefin to produce an electrode assembly. This electrode assembly was inserted into the above-described exterior housing can via a disk-shaped can bottom insulating plate, and the negative electrode lead connected to the negative electrode was connected, by welding to the bottom surface portion of the exterior housing can. Next, the grooving plastic working was performed with rotation rollers at a position of a height of 4 mm from an opening tip of the above-described exterior housing can. Then, the positive electrode lead connected to the positive electrode and the sealing assembly were connected by welding, and the electrolyte was injected. Then, the sealing assembly was inserted into the exterior housing can, and a bending process was performed at a position of a height of 2 mm from the opening tip of the exterior housing can as a starting point, and the sealing assembly was crimped and fixed to the opening end of the exterior housing can.

### <Comparative Example 1>

In production of an exterior housing can, a battery was produced in the same manner as in Example 1 except that the thin thickness portion was not formed.

### [Evaluation of Load Test]

In each battery of Example and Comparative Example, a displacement load test was performed which compresses the exterior housing can in the up-and-down direction in a range of a displacement amount up to 8 mm using a load cell. A potential difference between the sealing assembly serving as the positive electrode external terminal and the exterior housing can serving as the negative electrode external terminal was measured during the test, and it was determined that a short circuit occurred when a voltage drop of 0.05 V occurred. The evaluation results are shown in Table 1.

**[Table 1]**

| | The number of occurrences of short circuit / the number of tests |
|---|---|
| Example 1 | 0/10 |
| Comparative Example 1 | 3/10 |

As shown in Table 1, in the battery of Comparative Example, short circuits occurred, while in the battery of Example, no short circuit was confirmed. That is, by forming the thin thickness portion in the side surface portion of the exterior housing can, it is assumed that the thin thickness portion formed in the lower side of a portion that faces the positive electrode and the negative electrode in the electrode assembly is preferentially deformed when a load is applied to the exterior housing can in the up-and-down direction, whereby the damage of the electrode assembly can be effectively reduced.

### REFERENCE SIGNS LIST

10 Sealed battery, 11 Positive electrode, 12 Negative electrode, 13 Separator, 14 Electrode assembly, 15 Insulating plate, 16 Insulating plate, 17 Positive electrode lead, 18 Negative electrode lead, 19 Sealing assembly, 20 Exterior housing can, 20A Bottom surface portion, 20B Side surface portion, 20C Grooved portion, 21 Internal terminal plate, 21A Annular portion, 21B Center, 21C Vent hole, 22 Rupture disk, 22A Vent portion, 23 Insulating plate, 23A Opening, 23B Vent hole, 24 Gasket, 30, 40 Thin thickness portion, 31 Upper end, 32 Lower end, 33, 43 Groove, 34 Inclined surface, α Virtual line

## Claims

1. A sealed battery, comprising:
an electrode assembly in which a positive electrode and a negative electrode are laminated with a separator interposed between the positive electrode and the negative electrode,
a bottomed cylindrical exterior housing can that has a bottom surface portion and a side surface portion, and houses the electrode assembly, and
a sealing assembly with which an opening of the exterior housing can is capped; wherein
the exterior housing can has a thin thickness portion formed along a circumferential direction so that an inner surface of the side surface portion is recessed, and
a lower end of the thin thickness portion is located between the bottom surface portion of the exterior housing can and a lower end of the positive electrode in a height direction of the exterior housing can.

2. The sealed battery according to claim 1, wherein
an upper end of the thin thickness portion is located between the bottom surface portion of the exterior housing can and a lower end of the positive electrode in the height direction of the exterior housing can.

3. The sealed battery according to claim 1 or 2, wherein
the thin thickness portion has an inclined surface formed so that a thickness is gradually reduced from an upper end to a lower end.

4. The sealed battery according to any one of claims 1 to 3, wherein
a thickness of a portion at which the thickness of the thin thickness portion is smallest is less than or equal to 80% of a thickness of the side surface portion other than the thin thickness portion.

5. The sealed battery according to any one of claims 1 to 4, wherein
total circumferential length of the thin thickness portion is greater than or equal to one third of a circumferential length of an inner surface of the side surface portion.
